(19) Europäisches Patentamt / European Patent Office / Office européen des brevets

(11) **EP 3 944 561 A1**

(12) **EUROPEAN PATENT APPLICATION**

(43) Date of publication:
**26.01.2022 Bulletin 2022/04**

(21) Application number: **20186746.2**

(22) Date of filing: **20.07.2020**

(51) International Patent Classification (IPC):
**H04L 12/24** (2006.01)    **H04L 12/26** (2006.01)
**G06F 8/65** (2018.01)    **H04L 29/08** (2006.01)

(52) Cooperative Patent Classification (CPC):
**H04L 41/082; H04L 41/0889; H04L 67/12;**
**H04L 67/34;** H04L 41/0893; H04L 41/12;
H04L 43/0817

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• CHAKRABORTY, Rupsa
  **560048 Bangalore, Karnataka (IN)**

• KUMAR, R. Santhosh
  **641105 Coimbatore, Tamil Nadu (IN)**
• SHANBHAG, Sanjay
  **560070 Bangalore, Karnataka (IN)**
• STOLZE, Karina
  **90408 Nürnberg (DE)**
• YEO, David
  **90518 Altdorf (DE)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **REDUCTION OF POLICY ENFORCEMENT TIME IN INDUSTRIAL NETWORKS**

(57) The present disclosure relates to a system (105) and method (200) for managing an industrial network (110). The method comprises identifying, by one or more processing units (130), one or more nodes from a plurality of nodes in a topology of the industrial network (110). The one or more nodes are suitable for execution of one or more tasks. Further, a status associated with each of the identified nodes is determined based on the tasks. Further, dependency between each of the identified nodes and one or more remaining nodes in the plurality of nodes is determined, for execution of the tasks. Based on the status associated with the identified nodes and the determined dependency, an order of execution of the tasks on the identified nodes is dynamically determined. The execution of the tasks on network devices (115) corresponding to the identified nodes is initiated according to the determined order.

FIG 1A    100

**Description**

The present invention relates to a field of network management, and more particularly relates to a system and method for management of industrial networks.

Industrial networks are communication networks that provide interconnectivity between industrial equipment. Such industrial networks typically comprise a network management system for monitoring, analyzing, and troubleshooting a status of network devices connected to the industrial network. The network devices may include routers, switches, hubs, bridges, Programmable Logic Controllers and other industrial equipment. Further, an administrator may remotely manipulate the network devices through a user interface on the network management system. For example, the administrator may trigger update instructions on any of the network devices through the network management system. The update instructions are provided through a high-level abstraction called policy. Each such policy may comprise one or more rules. Each of the one or more rules comprise one or more tasks to be executed on a certain set of network devices that satisfies the conditions specified in the policy. A task is a set of instructions that run on a network device to complete a certain update. Using a single policy, an administrator may direct several types of updates on a plurality of the network devices. The total time taken for completing execution of all the tasks specified in the policy may be called a policy enforcement time. The policy enforcement time includes restart times of the network devices, as certain tasks may require that a network device be restarted. Further, it is possible that several policies are rolled out during the same time interval. In this case, the policy enforcement time is the time taken for all the policies to complete their respective actions on target network devices. Such policy enforcement may interfere with the normal data communication activities of the network devices. Therefore, a minimal policy enforcement time is desirable. In order to reduce the policy enforcement time, multiple policies may run concurrently on the network devices (inter-policy parallelism). Further, tasks within a policy are executed in parallel among the network devices (intra-policy parallelism). Both inter-policy parallelism and intra-policy parallelism require task parallelism within a single network device (intra-device) and task parallelism between network devices (inter-device). However, inter-device dependency for execution of certain tasks limits the amount of task parallelism achievable.

In light of the above, there exists a need for reducing policy enforcement timein an industrial network by minimizing effects of inter-device dependency.

Therefore, it is an object of this invention to provide a system and method for reducing policy enforcement time in industrial networks.

The object of the present disclosure is achieved by a method for managing an industrial network comprising a plurality of network devices. The term 'industrial network' as used herein, refers to any communication network that enables transfer of data in an industrial set-up. Non-limiting examples of industrial networks include supervisory networks and process control networks. Non-limiting examples of network devices include hubs, switches, modems, repeaters, bridges, routers, Programmable Logic Controllers, Remote Terminal Units (RTUs), Intelligent Electronic Devices (IEDs), Human Machine Interfaces (HMIs), Computerised Numerical Controllers (CNCs), drives, application servers, engineering workstations, supervisory management workstations, data historians and business information consoles. The industrial network may be part of a complex industrial set-up such as a power plant, a wind farm, a power grid, a manufacturing facility like an automobile manufacturing plant, a process plant and so on. Each of the network devices operate on specific communication protocols, such as RS-232 or RS-485, for transferring data with other network devices.

The method comprises identifying, by a processing unit, one or more nodes from a plurality of nodes in a topology of the industrial network. The plurality of nodes represent network devices in the industrial network. Each node may represent one or more network devices or a sub-network comprising a plurality of network devices on the industrial network. The one or more nodes are suitable for execution of one or more tasks. In one embodiment, the one or more nodes are identified by generating a directed graph based on the topology of the industrial network. The directed graph comprises the plurality of nodes joined by directed edges. Each of the nodes correspond to one or more network devices on the industrial network. The directed edges in the directed graph indicate path dependencies between the nodes. The term 'path dependency', as used herein, may refer to a reachability of the node for execution of a task. The reachability of the node is dependent on a connectivity of the node with one or more other nodes in the industrial network. For example, if a node A generates triggers for execution of tasks at another node B, and the node B is connected to the node through a node C, node B has a path dependency on node C. The node C may reboot in order to complete an upgradation during execution of an assigned task. While rebooting, the node B may not be reachable from the node A. If the node C is not required to reboot during execution of the task, the node B is reachable from the node A. In one embodiment, the node A is a system for managing the industrial network and the system comprises the processing unit as described above.

The topology of the industrial network may be, for example, stored as a first data object in a memory coupled to the processing unit. The first data object may further be parsed in order to generate the directed graph. Further, the one or more nodes are identified for execution of the one or more tasks based on the directed graph. In one embodiment, the one or more tasks are associated with upgradation of the network device corresponding to the node. Each of the one or more tasks comprise a set of machine-readable instructions. In an embodiment, the upgradation is associated with a software or a firmware associated with the network device. In another embodiment, the upgradation is associated with updating a configuration of the network device. The one or more tasks are stored, for example, in the form of a second data object in the memory associated with the processing unit. The second data object may comprise a plurality of rules for execution of the one or more tasks. For example, the rules may indicate an identity or nature of the network device suitable for executing the one or more tasks.

Advantageously, the present invention facilitates remote upgradation of network devices.

The method further comprises determining a status associated with each of the identified nodes based on the one or more tasks. The status is indicative of availability of paths through the identified nodes during execution of the tasks. In one embodiment, the status is determined by predicting availability of a path through the identified node based on a nature of the one or more tasks to be executed by the identified node. Further, the status of the identified node is determined based on the predicted availability of the path. For example, determining the status with each of the identified nodes comprises assigning a lock state to the identified node based on the nature of tasks to be executed by the identified. The lock state may be one of exclusive lock status and no-lock status. The exclusive lock status may refer to non-availablity of a path through the identified node for one or more nodes that have path dependency on the identified node. More specifically, an exclusive lock status is assigned to a node, in order to exclude availability of a path through the node. For example, the exclusive lock status is assigned to the identified node, if the task assigned to the identified node requires rebooting of the corresponding network device. This is because, rebooting disrupts a connection between the identified node and the one or more nodes that have path dependency on the identified node. The no-lock status may refer to availability of a path through the identified node for the one or more nodes that have path dependency on the identified node.

Advantageously, the present invention predicts availability of paths through the identified nodes before execution of the one or more tasks.

The method further comprises determining dependency between each of the identified nodes and one or more remaining nodes in the plurality of nodes for execution of the tasks. In a preferred embodiment, the dependency of each of the identified nodes is a path dependency. In one example, the path dependency is determined from the directed graph based on directed edges in the directed graph.

The method further comprises dynamically determining an order of execution of the one or more tasks on the identified nodes based on the status associated with the identified nodes and the determined dependency. In one embodiment, a method of dynamically determining the order of execution comprises determining a topological level of the identified nodes based on the status of the identified nodes and the determined dependency of the identified nodes. The term 'topological level' refers to a ranking assigned to each of the identified nodes, such that all nodes at the same topological level execute the one or more tasks concurrently.

Advantageously, the dynamic determination of order of execution helps in significantly reducing total time required for execution of tasks in a policy.

The method further comprises initiating the execution of the one or more tasks on network devices corresponding to the identified nodes according to the determined order. In one embodiment, a method of initiating the execution of the one or more tasks comprises triggering execution of the one or more tasks on each of the network devices based on the topological level associated with the identified node. For example, if there are four topological levels in the topology of the industrial network, at first, the execution is triggered at a first topological level, followed by the second, third and fourth topological levels in the order mentioned. The triggers corresponding to each topological level are generated irrespective of completion of tasks at the preceding topological level. As a result, the order of execution eliminates waiting time associated with receipt of triggers at the network devices due to path dependency.

Advantageously, the present invention maximizes concurrency in execution of tasks on the identified nodes, and reduces a policy enforcement time associated with the policy.

The object of the present disclosure is achieved by a system for management of an industrial network. The system comprises one or more processing units, and a memory unit communicatively coupled to the one or more processing units. The memory unit comprises a network management module stored in the form of machine-readable instructions executable by the one or more processing units. The network management module is configured to perform method steps described above. The execution of the network management module may also be performed using co-processors such as Graphical Processing Unit (GPU), Field Programmable Gate Array (FPGA) or Neural Processing/Compute Engines. In one embodiment, the system is a cloud computing system having a cloud computing based platform configured to provide a cloud service for management of industrial networks. As used herein, "cloud computing" refers to a processing environment comprising configurable computing physical and logical resources, for example, networks, servers, storage, applications, services, etc., and data distributed over the network, for example, the internet. The cloud computing platform may be implemented as a service for management of industrial networks. In other words, the cloud computing system provides on-demand network access to a shared pool of the configurable computing physical and logical resources. The network is, for example, a wired network, a wireless network, a communication network, or a network formed from any combination of these networks.

According to an embodiment of the present invention, the system may be an edge computing device. As used herein "edge computing" refers to computing environment that is capable of being performed on an edge device (e.g., connected to the network devices in the industrial setup on one end and to a remote server(s) such as for computing server(s) or cloud computing server(s) on other end), which may be a compact computing device that has a small form factor and resource constraints in terms of computing power. A network of the edge computing devices can also be used to implement the system. Such a network of edge computing devices is referred to as a fog network.

The object of the present disclosure is also achieved by a computer-program product having machine-readable instructions stored therein, which when executed by a processor, cause the processor to perform a method as describe above.

The object of the present disclosure is also achieved by a computer-readable storage medium comprising instructions which, when executed by a computer, cause the computer to perform a method as describe above.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention.

The present disclosure is further described hereinafter with reference to illustrated embodiments shown in the accompanying drawings, in which:

FIG 1A    illustrates a schematic representation of an environment for management of an industrial network, in accordance with an embodiment of the present invention;

FIG 1B    illustrates a block diagram of a system for management of an industrial network, in accordance with an embodiment of the present invention;

FIG 2    is a flowchart depicting a method for management of the industrial network, in accordance with an embodiment of the present invention;

FIG 3    is a flowchart depicting a method for identifying one or more nodes on the industrial network, for execution of one or more tasks, in accordance with an embodiment of the present invention;

FIG 4    illustrates a directed graph indicative of a topology of the industrial network, in accordance with an embodiment of the present invention;

FIG 5    is a flowchart depicting a method for determining a status associated with each of the identified nodes based on the one or more tasks, in accordance with an embodiment of the present invention;

FIG 6    is a flowchart depicting a method for identifying topo-logical levels associated with the identified nodes, in accordance with an embodiment of the present invention; and

FIG 7    illustrates a directed graph indicative of a topology of an industrial network, in accordance with another embodiment of the present invention.

Hereinafter, embodiments for carrying out the present disclosure are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

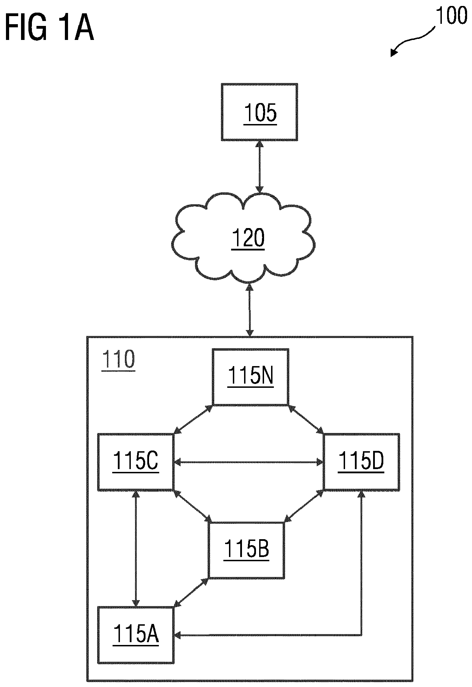

FIG 1A illustrates an environment 100 of a system 105 for management of an industrial network 110, in accordance with an embodiment of the present invention. The industrial network 110 comprises a plurality of network devices 115A-N, hereinafter collectively referred to as network devices 115.

The system 105 commmunicates with the industrial network 110 over a communication network 120. The communication network is, for example, a wired network, a wireless network or a combination thereof. The system 105 may be a specific purpose computer, a workstation, a virtual machine running on host hardware, a microcontroller, or an integrated circuit. As an alternative, the system 105 may be a real or a virtual group of computers (a real group of computers is generally known as "cluster", and a virtual group of computers is generally known as "cloud computing system").

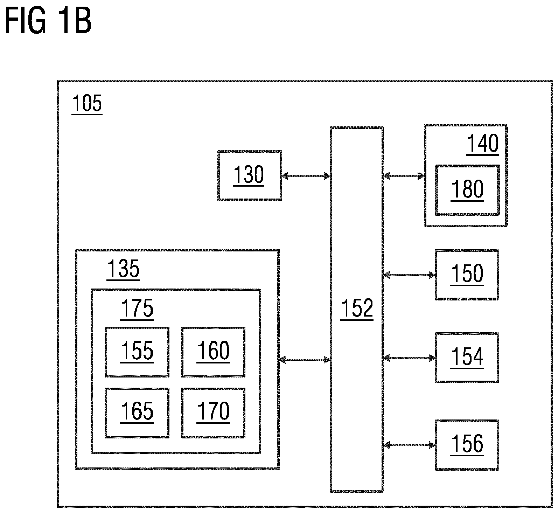

FIG 1B illsutrates a block diagram of the system 105 for management of the industrial network 110, in accordance with an embodiment of the present invention. As shown in FIG 1B, the system 105 includes a processing unit 130, a memory 135, a storage unit 140, a communication unit 150, a standard interface or bus 152, an input unit 154, and an output unit 156.

The processing unit 130, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 130 may also include embedded controllers, such as generic or programmable logic devices or arrays, application specific integrated circuits, single-chip computers, and the like. In general, a processing unit 130 may comprise hardware elements and software elements. The processing unit 130 can be configured for multi-threading, i.e. the processing unit 130 may host different calculation processes at the same time, executing the either in parallel or switching between active and passive calculation processes.

The memory 135 may include one or more of a volatile memory and a non-volatile memory. The memory 135 may be coupled for communication with the processing unit 130. The processing unit 130 may execute instructions and/or code stored in the memory 135. A variety of computer-readable storage media may be stored in and accessed from the memory 135. The memory 135 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

The storage unit 140 comprises a non-volatile memory which stores one or more computer programs for management of an industrial network 110. In addition, the storage unit 140 may also comprise a database 180. The database 180 stores information corresponding to topology of the industrial network 110, technical and operational information associated with the network devices 115, and operational logs and event logs associated with network devices 115. The bus 152 acts as interconnect between the processing unit 130, the memory 135, the storage unit 140, the communication unit 150. The input unit 154 may include input means such as keypad, touch-sensitive display, camera, etc. capable of receiving input signals. The output unit 156 may include, for example, monitor and printers.

The communication unit 150 enables the system 105 to communicate with the one or more network devices 115 over the communication network 120. The communication unit 150 may support different standard communication protocols such as Transport Control Protocol/Internet Protocol (TCP/IP), Profinet, Profi-bus, and Internet Protocol Version (IPv).

In the present embodiment, the memory 135 includes a network management module 175 comprising a topology generation module 155, a status identification module 160, a levelization module 165, and a trigger module 170. The modules 155, 160, 165, 170, and 175 is stored in the form of machine-readable instructions on any of the above-mentioned storage media and may be in communication to and executed by the processing unit 130. Upon execution, the network management module 175 causes the processing unit 130 to manage the industrial network 110.

The topology generation module 155 is configured for identifying one or more nodes from a plurality of nodes in a topology of the industrial network 110. The plurality of nodes represent the network devices 115 in the industrial network 110. The one or more nodes are suitable for execution of one or more tasks.

The status identification module 160 is configured for determining status associated with each of the identified nodes based on the one or more tasks. The status is indicative of availability of paths through the identified nodes for execution of the tasks.

The levelization module 165 is configured for determining dependency between each of the identified nodes and one or more remaining nodes in the plurality of nodes for execution of the tasks. The levelization module 165 is also configured for dynamically determining an order of execution of the one or more tasks on the identified nodes based on the status associated with the identified nodes and the determined dependency.

The trigger module 170 is configured for initiating the execution of the one or more tasks on network devices 115 corresponding to the identified nodes according to the order determined.

Those of ordinary skilled in the art will appreciate that the hardware depicted in FIGS 1A and 1B may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present disclosure.

A system in accordance with an embodiment of the present disclosure includes an operating system employing a Graphical User Interface. The operating system permits multiple display windows to be presented in the Graphical User Interface simultaneously with each display window providing an interface to a different application or to a different instance of the same application. A cursor in the Graphical User Interface may be manipulated by a user through the pointing device. The position of the cursor may be changed and/or an event such as clicking a mouse button, generated to actuate a desired response.

One of various commercial operating systems, such as a version of Microsoft Windows™ may be employed if suitably modified. The operating system is modified or created in accordance with the present disclosure as described.

The present disclosure is not limited to a particular computer system platform, processing unit, operating system, or network. One or more aspects of the present disclosure may be distributed among one or more computer systems, for example, servers configured to provide one or more services to one or more client computers, or to perform a complete task in a distributed system. For example, one or more aspects of the present disclosure may be performed on a client-server system that comprises components distributed among one or more server systems that perform multiple functions according to various embodiments. These components comprise, for example, executable, intermediate, or interpreted code, which communicate over a network using a communication protocol. The present disclosure is not limited to be executable on any particular system or group of system, and is not limited to any particular distributed architecture, network, or communication protocol.

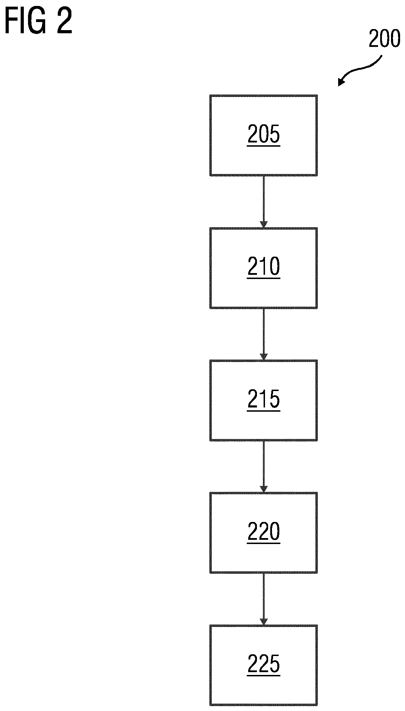

FIG 2 is a process flowchart depicting a method 200 for managing the industrial network 110 comprising the plurality of network devices 115, in accordance with an embodiment of the present disclosure. The method 200 comprises steps 205-225.

At step 205, one or more nodes are identified from a plurality of nodes in a topology of the industrial network 110. The plurality of nodes represent the plurality of network devices 115 in the industrial network 110. The one or more nodes are suitable for execution of one or more tasks.

At step 210, a status associated with each of the identified nodes is determined based on the one or more tasks. The status is indicative of availability of paths through the identified nodes during execution of the one or more tasks.

At step 215, dependency between each of the identified nodes and one or more remaining nodes in the plurality of nodes is determined for execution of the tasks.

At step 220, an order of execution of the one or more tasks on the identified nodes is dynamically determined based on the status associated with the identified nodes and the determined dependency.

At step 225, execution of the one or more tasks is initiated on network devices corresponding to the identified nodes according to the determined order.

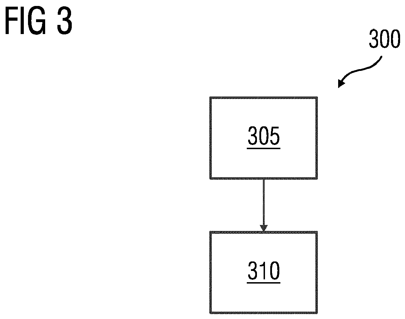

The method steps 205-225 are explained in greater detail with reference to FIGS 3 to 7. More specifically, the method steps 205-225 are explained by considering that the system 105 is rolling out a policy for enforcement on the industrial network 110. The policy may be associated with upgradation of software component (e.g., firmware) associated with the network devices 115.

FIG 3 is a flowchart depicting a method 300 for identifying one or more nodes on an industrial network 100 for execution of one or more tasks in accordance with an embodiment of the present invention. The method 300 is performed through execution of the topology generation module 155 by the processing unit 130. In one embodiment, the system 105 receives a first data object and one or more second data objects from an administrator through the input unit 154. The first data object corresponds to a topology of the industrial network 110. For example, the first data object may be a file in JSON format comprising information indicating connectivity between the network devices 115. On parsing of the first data object, nodes and path dependencies associated with the nodes may be identified. Each of the one or more second data objects corresponds to a policy comprising rules for upgrading one or more network devices on the industrial network 110. Each rule comprises at least one task to be executed by network devices of a specific class. Examples of specific classes of network devices may include Network switches, routers, PLCs, RTUs, IEDs and HMIs. The policy may comprise update instructions corresponding to Network switches, routers, PLCs, RTUs, IEDs and HMIs. In another embodiment, the first data object and the second data objects are stored in the storage unit 140. The processing unit 130 fetches the first data object and the second data objects from the storage unit 140 upon receiving an input from the administrator. For example, the system 105 may be installed with a client application that enables the administrator to monitor the industrial network 110. The client application may enable the administrator to select the first data object and the second data object from a plurality of data objects stored on the storage unit through a user interface of the system 105. Further, the administrator may roll out the policy to the industrial network 110 by clicking on an 'Upgrade' tab on the user interface.

At step 305, the first data object is parsed to generate a directed graph of the topology. The directed graph comprises a plurality of nodes. Each of the nodes is associated with a network device connected to other network devices in the industrial network 110. Each node is connected to one or more other nodes through directed edges. In other words, parsing of the first data object is performed to identify node objects corresponding to nodes of the directed graph and the directed edges corresponding to links between the nodes. The directed edges indicate relationships among the nodes. The relationships are indicative of path dependencies among the nodes.

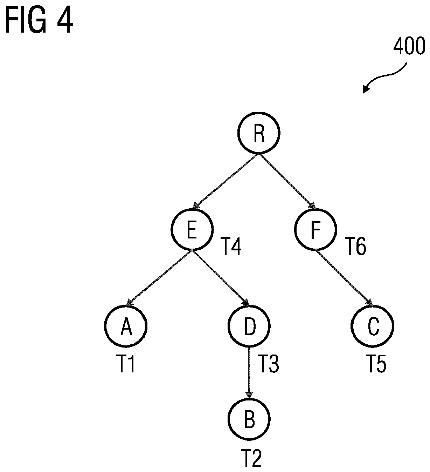

FIG 4 shows a directed graph 400 indicative of a topology of an industrial network 110, in accordance with an exemplary embodiment of the present present invention. The directed graph comprises a root node R corresponding to the system 105. The root node R is connected to a node E through a directed edge originating from the root node R and terminating at the node E. The directed edge indicates a parent-child relationship, where the root node R is the parent and the node E is the child node. Each of the directed edges in the first data object may be indicated by ordered pairs of parent and child nodes. For example, the directed edge from the root node R to the node E is indicated by (R, E). Accordingly, it may be understood from FIG 4 that the root node R has two child nodes, E and F. Similarly, the node E has two child nodes, A and D. The node D has a child node B. The node F has a child node C. Each of the nodes A-F corresponds to one or more network devices on the industrial network 110. For example, nodes A, B, C, D, E, and F may correspond to the network devices 115A, 115B, 115C, 115D, 115E, 115F respectively of the industrial network 110. In the present example, the child nodes are dependent on respective parent nodes for initiating execution of tasks. More specifically, triggers for execution of tasks on the child nodes propagates from the root node R through respective parent nodes. For example, in case of a task at node B, the trigger for execution of the task originates from the root node R and propagates through the node E followed by the node D before reaching the node B. Therefore, the child nodes are dependent on the parent nodes for initiating execution of tasks.

Referring back to FIG 3, at step 310, the one or more nodes are identified for executing the one or more tasks in the policy from the directed graph. Firstly, specific classes of the network devices 115 to be upgraded are identified from the second data object. Further, the nodes corresponding to the specific classes are identified from the directed graph. For example, if the second data object comprises rules associated with upgradation of HMIs and IEDs, the nodes corresponding to HMIs and IEDs are identified from the directed graph for execution of the tasks.

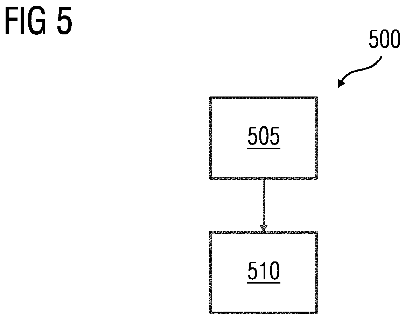

FIG 5 is a flowchart depicting a method 500 for determining a status associated with each of the identified nodes based on the one or more tasks, in accordance with an embodiment of the present invention. The method 500 is performed through execution of the status identification module 160 by the processing unit 130.

At step 505, availability of a path through the identified node during execution of the one or more tasks is predicted. The availability of the path is predicted based on a nature of the task to be executed by the identified node. For example, the policy may comprise tasks T1, T2, T3...T6 to be executed by the nodes A, B, D, E, C, and F respectively. The task T3 may require the node D to reboot during execution, in order to complete the execution of the task T3. Consequently, a path may not be available through the node D during execution of the task T3. However, the task T6 may not require the node F to reboot in order to complete the execution of the task T6. Consequently, a path is available through the node F during execution of the task T6.

At step 510, status of the identified node is determined based on the predicted availability of paths through the identified node. The status of the identified node may be one of exclusive lock status and no-lock status. The exclusive lock status may indicate that the identified node is unable to provide connectivity to other nodes having a path dependency on the identified node, while executing the task assigned by the policy. The no-lock status may indicate that the identified node is capable of providing connectivity to other nodes having a path dependency on the identified node, while executing the task assigned by the policy. The tasks assigned by the policy may include, for example, downloading of firmware, activation of firmware, restart tasks, setting of parameters associated with the network device and so on.

Further, path dependency between each of the identified nodes and one or more remaining nodes in the directed graph is determined. The path dependency is determined by analysing the directed edges present in the directed graph. For example, if the directed edge is (D, B), the status identification module 160 determines that the node B has a path dependency on the node D. Similarly, path dependencies associated with each of the nodes in the industrial network is determined Subsequently, a topological level of the identified nodes is determined based on the status of the identified nodes and the determined path dependency of the identified nodes. The topological level is determined using a topological ordering algorithm that traverses all the nodes on the directed graph using a bottom-up approach.

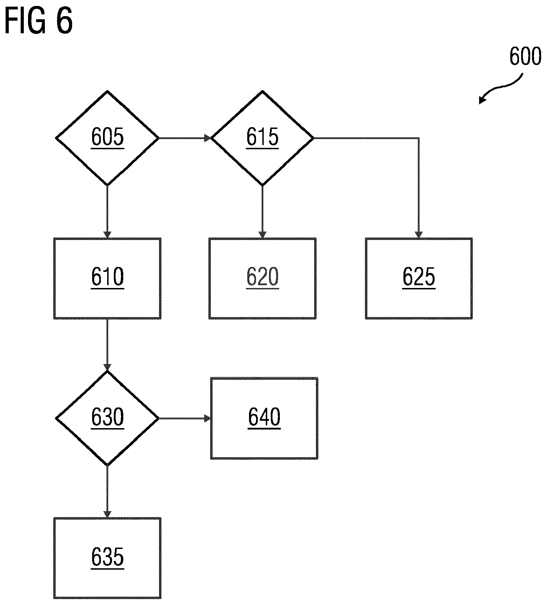

FIG 6 is a flowchart depicting a method 600 for identifying topological levels associated with the identified nodes, in accordance with an embodiment of the present inventions. The method 600 is performed through execution of the levelization module 165 by the procesing unit 130.

At step 605, it is determined whether there are child nodes to a node in the directed graph based on the path dependency associated with the nodes in the directed graph. If the node has child nodes in the directed graph, then step 610 is performed. If the node does not have child nodes in the directed graph, step 615 is performed. At step 615, it is determined whether the node is one of the identified nodes. If the node is one of the identified nodes, a topological level of '1' is assigned to the node as shown in step 620. Otherwise, a topological level of '0' is assigned to the node as shown in step 625.

At step 610, a maximum of topological levels assigned to all child nodes of the node is determined.

At step 630, it is determined whether the status associated with the node is exclusive lock status. If the status is exclusive lock status, the topological level of the node is determined, at step 635, as:

$$Topological\ level = maximum\ of\ topological\ levels\ assigned\ to\ child\ nodes + 1$$

If the status of the node is no-lock status, the topological level is determined to be same as the maximum of topological levels assigned to the child nodes as indicated by step 640.

The steps 605-640 are repeated for all nodes on the directed graph in a bottom up approach. Subsequently, the levelization module 165 replaces topological level corresponding to the identified nodes in no-lock status with '1'. It must be understood here that the initial computation of the topological level of nodes in no-lock status as in step 640 is necessary to compute topological levels of the nodes in exclusive lock statuss accurately.

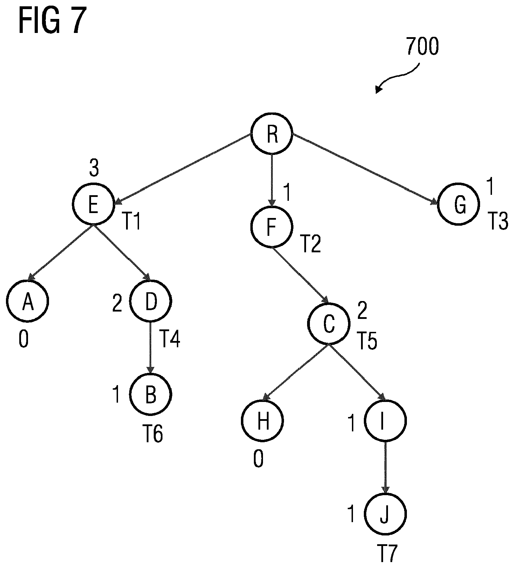

The topological levels determined, as described above, are indicative of the order of execution of the tasks on the identified nodes. The execution of the tasks are triggered, by the trigger module 170, in the order of the topological levels assigned to the identified nodes. More specifically, tasks at nodes of the same topological level are triggered at once. For example, firstly, execution of tasks at nodes with topological level '1' are triggered. Therefore, all nodes at the topological level '1' may execute the respective tasks concurrently. Next, execution of tasks at nodes with topological level '2' are triggered followed by nodes with topological level '3' and so on. It must be understood that the execution of tasks at nodes at topological level '2' need not wait until the execution of tasks at nodes at topological level '1'. The method steps 605-640 are explained using an example based on FIG 7.

FIG 7 illustrates a directed graph 700 indicative of a topology of an industrial network, in accordance with another exemplary embodiment of the present invention. The directed graph comprises nodes a root node corresponding to a system (similar to the system 105 of FIG 1). The root node R has three child nodes, viz. E, F and G. The node E has two child nodes, A and D. Further, the node D has a child node, B. The node G has no child nodes. The node F has a child node C. Further, the node C has two child nodes, H and I. The node H as no child nodes. The node I has a child node J.

The example is explained by considering the nodes B, C, D and E to be in exclusive lock status. Here, the policy assigns tasks T1, T2, T3, T4, T5, T6, T7 to nodes E, F, G, D, C, B, J respectively as indicated in the FIG 7. No tasks are assigned to node A, H and I. On traversing from the bottom of the directed graph, it is determined that the A, B, H, J, G are leaf nodes having no child nodes. The nodes A and H are assigned topological level of '0' as no tasks are assigned to these nodes. The remaining leaf nodes B, J and G are assigned a topological level of '1' as tasks are assigned to these nodes. Node D is assigned the topological level of '2' as the status of node D is determined to be exclusive lock status and the maximum topological level of child nodes (that is, of node B) is '1'. Node I is assigned topological level of '1' as the status of node I is determined to be no-lock status and the maximum topological level of child nodes (that is, of node J) is '1'. Node E is assigned topological level of '3' as the status of node E is determined to be exclusive lock status and the maximum topological level of child nodes (that is, among nodes A and D) is '2'. Node C is assigned topological level of '2' as the status of node C is determined to be exclusive lock status and the maximum topological level of child nodes (that is, among nodes H and I) is '1'. Node F is assigned topological level of '2' as the status of node F is determined to be no-lock status and the maximum topological level of child nodes (that is, of node C) is '2'. Further, the topological levels corresponding to all nodes having status as no-lock status is replaced with '1'. As a result, the node F is reassigned a toplogical level of '1'. FIG 7 shows topological levels assigned to each of the nodes prior to triggering of the tasks. In the current example, tasks T6, T7, T2, T3 at nodes B, J, F, G respectively, are triggered first, as nodes B, J, F, G are at topologic level '1'. Next, tasks T4 and T5 at nodes C and D, respectively, are triggered, as nodes C and D are at topological level '2'. The task T1 at node E is triggered next, as the node E is at topological level 3.

The present invention eliminates waiting time associated with triggering of tasks on network devices. For example, if all the nodes are assigned a task T that requires time t for execution and $\Delta$ is a propagation delay associated with propagation of the trigger for execution of the task T to the node farthest from the processing unit, the total policy enforcement time $t_p$, in the present invention, is given by:

$$t_p = t + \Delta$$

In addition to the other advantages mentioned herein, the present invention also saves time associated with execution of tasks corresponding to nodes in no-lock status, which are assigned a topological level of 1, that would have otherwise been executed only on the basis of strict hierarchical way in the topology. It must be understood that the exact amount of time saved depends on actual time taken for execution of various tasks associated with the nodes.

The present disclosure may take the form of a computer program product comprising program modules accessible from computer-usable or computer-readable medium storing program code for use by or in connection with one or more computers, processors, or instruction execution system. For the purpose of this description, a computer-usable or computer-readable medium is any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology may be centralized or distributed (or a combination thereof) as known to those skilled in the art.

While the invention has been illustrated and described in detail with the help of a preferred embodiment, the invention is not limited to the disclosed examples. Other variations can be deducted by those skilled in the art without leaving the scope of protection of the claimed invention.

List of reference signs

100 environment of a system for managing an industrial network

105 system for managing an industrial network

110 industrial network

115 network device

120 communication network

130 processing unit

135 memory

140 storage unit

150 network interface

152 standard interface or bus

154 an input unit

156 output unit

155 topology generation module

160 status identification module

165 levelization module

170 trigger module

175 network management module

180 database

**Claims**

1.  A computer-implemented method for managing an industrial network (110) comprising a plurality of network devices (115), the method comprising:

    identifying, by a processing unit (130), one or more nodes from a plurality of nodes in a topology of the industrial network (110), wherein the plurality of nodes represent network devices (115) in the industrial network (110), and wherein the one or more nodes are suitable for execution of one or more tasks;
    determining a status associated with each of the identified nodes based on the one or more tasks, wherein the status is indicative of availability of paths through the identified node during execution of the tasks;

determining dependency between each of the identified nodes and one or more remaining nodes in the plurality of nodes for execution of the tasks;

dynamically determining an order of execution of the one or more tasks on the identified nodes based on the status associated with the identified nodes and the determined dependency; and

initiating the execution of the one or more tasks, on network devices (115) corresponding to the identified nodes, according to the determined order.

2. The method according to claim 1, wherein identifying the one or more nodes from the plurality of nodes in the topology of the industrial network (110) comprises:

generating a directed graph based on the topology of the industrial network (110); and
identifying the one or more nodes based on the directed graph.

3. The method according to any of the claims 1 and 2, wherein the one or more tasks are associated with upgrading the network devices (115) corresponding to the identified nodes.

4. The method according to any of the claims 1 to 3, wherein determining the status associated with each of the identified nodes based on the one or more tasks comprises:

predicting availability of a path through the identified node based on a nature of the one or more tasks to be executed by the identified node; and
identifying the status of the identified node based on the predicted availability of the path.

5. The method according to any of the claims 1 to 4, wherein the dependency between each of the identified nodes and one or more remaining nodes is a path dependency.

6. The method according to any of the claims 1 to 5, wherein dynamically determining the order of execution of the one or more tasks on the identified nodes based on the status associated with the identified nodes and the determined dependency comprises:
determining a topological level of the identified nodes based on the status of the identified nodes and the determined dependency of the identified nodes.

7. The method according to any of the claims 1 to 6, wherein initiating the execution of the one or more tasks on the network devices (115) corresponding to the identified nodes, according to the determined order comprises:
triggering execution of the one or more tasks on each of the network devices (115) based on the topological level associated with the identified nodes.

8. A system (105) for managing an industrial network (110), the system (105) comprising:

one or more processing units (130); and
a memory unit (135) communicatively coupled to the one or more processing units (130), wherein the memory unit (135) comprises a network management module (175) stored in the form of machine-readable instructions executable by the one or more processing units (130), wherein the network management module is configured to perform method steps according to any of the claims 1 to 7.

9. A computer-program product having machine-readable instructions stored therein, which when executed by one or more processing units (130), cause the processing units to perform a method according to any of the claims 1 to 7.

10. A computer-readable storage medium comprising instructions which, when executed by a data-processing system, cause the data-processing system to perform a method according to any of the claims 1 to 7.

FIG 1A

100

105

120

110

115N

115C

115D

115B

115A

# FIG 1B

FIG 2

200

205

210

215

220

225

FIG 3

300

305

310

FIG 4

400

FIG 5

500

505

510

# FIG 6

600

FIG 7

700

Europäisches
Patentamt

European
Patent Office

Office européen
des brevets

# EUROPEAN SEARCH REPORT

Application Number

EP 20 18 6746

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/003951 A1 (NEWELL DON [US] ET AL) 5 January 2017 (2017-01-05) | 1,3-10 | INV. H04L12/24 |
| Y | * paragraph [0015] - paragraph [0103]; figures 1A-8 * | 2 | H04L12/26 G06F8/65 H04L29/08 |
| X | US 2020/026505 A1 (OLDERDISSEN JAN RALF ALEXANDER [DE]) 23 January 2020 (2020-01-23) * paragraph [0030] - paragraph [0150]; figures 1A-8C * | 1,3-10 | |
| Y | US 2019/182107 A1 (SAXENA AAYUSH [US] ET AL) 13 June 2019 (2019-06-13) * paragraph [0004] - paragraph [0061]; figures 1-7 * | 2 | |
| Y | US 2016/124739 A1 (ZONGKER DOUGLAS EARL [US]) 5 May 2016 (2016-05-05) * paragraph [0002] - paragraph [0261]; figures 1A-14 * | 2 | |
| A | US 2018/359144 A1 (MALASPINA FABIO [US] ET AL) 13 December 2018 (2018-12-13) * paragraph [0002] - paragraph [0068]; figures 1-3 * | 1-10 | **TECHNICAL FIELDS SEARCHED (IPC)**<br><br>H04L<br>G06F |

The present search report has been drawn up for all claims

| Place of search | Date of completion of the search | Examiner |
|---|---|---|
| Munich | 19 January 2021 | Lupia, Sergio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 18 6746

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2021

| Patent document cited in search report | | Publication date | Patent family member(s) | | Publication date |
|---|---|---|---|---|---|
| US 2017003951 | A1 | 05-01-2017 | EP | 3317762 A1 | 09-05-2018 |
| | | | US | 2017003950 A1 | 05-01-2017 |
| | | | US | 2017003951 A1 | 05-01-2017 |
| US 2020026505 | A1 | 23-01-2020 | NONE | | |
| US 2019182107 | A1 | 13-06-2019 | NONE | | |
| US 2016124739 | A1 | 05-05-2016 | US | 2016124739 A1 | 05-05-2016 |
| | | | US | 2017262276 A1 | 14-09-2017 |
| US 2018359144 | A1 | 13-12-2018 | NONE | | |

EPO FORM P0459

For more details about this annex : see Official Journal of the European Patent Office, No. 12/82